# EUROPEAN PATENT APPLICATION

(11) **EP 4 480 336 A2**
(43) Date of publication of application: **25.12.2024**
(21) Application number: 24212069.9
(22) Date of filing: 17.12.2018
(51) Int. Cl.: A41D 13/015, A41D 13/018, B62J 27/00

(54) **GARMENT FOR A USER'S PROTECTION COMPRISING AN INFLATABLE MEMBER**

(30) Priority: 18.12.2017 IT 201700145819
(62) Divisional of application: 21188284.0
(71) Applicant: Dainese S.p.A., 36064 Colceresa (Vicenza) (IT)
(72) Inventor: AZZOLIN, Andrea, 36064 Colceresa (Vicenza) (IT); RONCO, Luigi, 36064 Colceresa (Vicenza) (IT)
(74) Representative: Manfrin, Marta

(57) **Abstract**

The present invention relates to a garment (1) apt to be associated with a protection device for personal protection. The garment (1) according to the present invention comprises at least a region (10, 20) configured to include, or be associated with, an inflatable member (100) which is at least partially folded on itself in the deflated condition and is apt to protect, at least partially, the user's chest area. When the inflatable member (100) is in a deflated condition, this region (10, 20) has a portion not occupied by said inflatable member (100), whereas when the latter is in an inflated condition, the region (10, 20) is occupied by the inflatable member (100).

## Description

The present invention relates in general to a garment, and more particularly, to a garment apt to be associated with a protection device for personal protection. The device is a device intended to protect the body of a user, such as a passenger, a motor-vehicle driver or a similar user, from impacts and/or falls during a sport and/or working activity.

In recent years, following a constant search for safety during sport activities, but more generally of all those risky activities done in extreme conditions or at high speeds, garments apt to be associated with a user's personal protection device have been designed. In particular, the motorcycle industry is very attentive to these problems and, in recent years, it has been intensified the offer of garments including said protection device allowing the achievement of an effective and, at the same time, comfortable protection of the motorcyclist or driver.

An effective solution is for example that of associating an inflatable member, such as a bag made of an airtight material, with a portion of a garment at potentially impacted body parts. The inflatable member is also placed in fluid communication, at the time of an impact, of a slip or in general of a fall, with a source of compressed gas, such as a can. Generally, the gas source is apt to introduce into the inflatable member a predetermined amount of compressed gas such as to put the inflatable member in inflated condition, thus in tension, so as to form an inflated casing.

In practice, the inflatable member in a deflated condition is received in a portion of the garment. More particularly, the inflatable member is arranged deflated underneath said garment portion so that the latter acts as a covering surface for the inflatable member. Usually, the bag is formed by two sheets joined along the perimeter, and the perimeter has a shape or profile to adequately cover areas of the human body to be protected. The two sheets actually form a member, flat in a deflated condition, which is covered by the covering surface of the garment arranged above the inflatable member.

It follows that the covering surface of the garment defines a layer of the garment and the bag in deflated condition defines, as a whole, another layer of the garment, or additional layer. The garment per se may include other layers, such as inner liners or paddings, completing the garment. These layers, as well as the covering surface, lend the garment technical characteristics of perspiration, ventilation, thermal capacity, protection against falls and resistance to abrasion. These peculiarities are determined by the combination of layers that are specific to the garment itself independently of the inflatable member.

Underlying the present disclosure, there is the observation by the authors of the present disclosure that when an inflatable member is arranged flat in a garment seat, or in general underneath a covering surface, it defines an additional layer, i.e., a layer that is added to the covering surface and/or in general to the other layers of the garment.

Underlying the present disclosure there is the further observation that there would be the need of providing a garment equipped with an inflatable member capable of offering a user effective protection from numerous and different types of impact, without however being detrimental to the above-mentioned peculiarities and intrinsic technical characteristics of the garment, or in any case having a minimal impact on these characteristics.

Therefore, a technical problem underlying the present disclosure is that of providing a garment that allows overcoming of the aforementioned drawbacks with reference to the prior art and that can satisfy said need. In particular, it is a matter of providing a garment equipped with an inflatable member capable not only of inflating sufficiently quickly, in the event of a fall or the like, to protect the body parts potentially affected by impacts, but also of being of a minimum size for a user and, thus, of affecting as little as possible the technical characteristics deriving from the composition of the layers forming the garment.

This is achieved through a garment and a method as defined in the respective independent claims. Secondary features of the garment according to the present invention are defined in the dependent claims.

In particular, according to the present disclosure, it is provided a garment including at least one inflatable member and at least one garment portion provided with a seat apt to receive an inflatable member. The seat includes at least a first region apt to receive the inflatable member in a deflated condition and a second region which is free of the inflatable member in a deflated condition. The second region receives the inflatable member in an inflated condition and is open towards the first region in order to receive the inflatable member, such as during inflation from the deflated condition to the deflated condition.

In other words, the aforesaid technical problem can be solved by a garment including at least one inflatable member and one garment portion provided with a seat apt to receive an inflatable member. The garment comprises one or more layers forming the garment structure. The seat includes at least a first region apt to receive the inflatable member in a deflated condition and a second region. The inflatable member in a deflated condition does not constitute any additional layer for the garment, or is not part of the layers of the garment, in the second region of the seat. The second region receives the inflatable member only in an inflated condition and is open towards the first region in order to receive the inflatable member, such as during an inflation phase from the deflated condition to the deflated condition.

The aforesaid seat can be included between the layers of the garment. In other words, the inflatable member is enclosed between the layers of the garment both in an inflated condition and in a deflated condition. That is to say that, even after activation, i.e. inflation, the inflatable member does not come out of the garment structure but it is always covered by at least one layer of the garment itself, such as for example an outer lining or a covering layer of the housing seat.

The garment portion is to be understood as a garment portion worn on a body part, such as the bust (neck region, chest region, shoulder joint region, back and arms). The garment portion is produced according to a predefined textile technology apt to lend certain characteristics to the garment.

The seat receiving the inflatable member is a seat allowing the inflatable member to be covered both in an inflated condition and in a deflated condition. The seat is defined by at least one covering surface underneath which the inflatable member is located. In other words, said garment portion includes, in correspondence of the inflatable member, that is to say the area covering and being above the inflatable member, a covering surface arranged to completely cover/close the latter, and forming the seat for the inflatable member.

Preferably, the garment further comprises at least one inner lining which forms, together with the covering surface, or with another layer of the garment, a housing or inner pocket for the inflatable member. Actually, the seat can be defined between the inner lining and the covering surface (in particular its inner side), or, as said, between layers of the garment. Alternatively, or in combination with the above embodiments, in order to permanently hold the inflatable member in the seat underneath the covering surface, the garment comprises seams, hooks, or other systems suitable for securing the inflatable member to the covering surface.

Actually, as mentioned above, the inflatable member is firmly placed in correspondence of a seat of a garment portion, so that in said seat, there is a covering or closing surface of the inflatable member, from the outside. The inflatable member is preferably firmly associated to the seat, such as inside the housing or underneath the covering surface of the garment, for example on the inner lining.

The seat is such as to include a first region which receives the inflatable member in a deflated condition and a second region which is free from the inflatable member when the latter is in a deflated condition, i.e. it does not receive the inflatable member in a deflated condition. The second region is also able to receive at least part of the inflatable member when the latter is in an inflated condition. To this end, the seat is seamlessly open between the first region and the second region. The seat preferably defines an inner chamber or internal empty area which is free from the inflatable member when the latter is deflated and where the inflatable member can spread out and swell at the time of impact.

Preferably, in the inflated condition, a part of the inflatable member occupies the first region of the seat, and a part of the inflatable member occupies the second region of the seat. In particular, preferably, in a deflated condition, the inflatable member occupies a surface of about one third of the seat. In other words, preferably, the first region extends over the seat surface for about one third of it.

Preferably, in the deflated condition, the inflatable member is folded on itself, at least once, or, more preferably, it is substantially in an accordion configuration and it occupies the first region. When the inflatable member is inflated, for example in the event of an impact, the inflatable member unfolds and part of the inflatable member arranges itself in the second region. Due to the peculiarity of an accordion configuration, upon inflation, part of the inflatable member, in inflated condition, remains in the first region of the seat.

Alternatively to the accordion configuration, the inflatable member is rolled up on itself, and unfolds at the time of inflation.

Preferably, the garment is made, at least partially, of a transpiring material and/or a material allowing air to pass through it, i.e. allowing ventilation, for example it is a perforated material or has one or more ventilation openings. In other words, the garment preferably has one or more parts made of a material apt to allow breathability and/or ventilation. The main benefit of the fact that the inflatable member in deflated condition occupies only a part of the garment seat is that, when the inflatable member is in non-active condition, and in fact not used, it forms an additional layer in the garment in a confined way, only in a limited region of the garment. In the remaining part of the garment (second region of the seat), the inflatable member does not form an additional layer. It follows that the garment can preserve its peculiarities and technical characteristics due to the combination of layers chosen to produce the garment, which layers can be, as mentioned, apt to ventilation or breathability. Such layers include, for example, the inner lining and the covering surface of the housing seat of the inflatable member. Upon inflation, the inflatable member performs its protective function protecting the parts of the body to be protected.

In other words, one of the technical features that can best be preserved is the breathability and/or ventilation of the garment. Indeed, in the region where in a deflated condition the inflatable member is not present, the garment can preserve the breathability and/or ventilation characteristics obtained thanks to the layers making up the garment.

It follows that an inflatable member capable of protecting human body parts from impacts can be arranged within a garment; which garments is capable of ensuring at the same time good impact protection, high comfort of use and sufficient breathability and/or ventilation of the garment itself.

In other words, thanks to the confined arrangement of the inflatable member in a deflated condition inside the garment itself, the latter ensures sufficient breathability which allows a good thermal insulation and promotes the biological transpiration, so that human body humidity is removed more easily, sweat condensation is decreased and, consequently, the comfort of use is increased. Moreover, thanks again to the confined arrangement of the inflatable member in a deflated condition inside the garment itself, the latter can also ensure sufficient ventilation which contributes to the regulation and maintenance of an ideal body temperature, allowing the circulation of air through the garment and the dispersion of excessive body heat.

For example, if a perforated material or a material having ventilation openings or generally capable of allowing ventilation, is used especially in the chest area or front area, and the folded inflatable member in a deflated condition is arranged preferably at a lateral or side area with respect to the garment chest area or front area, it is possible to let ventilation air passing through the garment from the front area itself. This occurs preferably during a dynamic activity, such as a motorbike ride, a ride on a horseback or by bicycle, when the air comes in from the chest area and can flow from behind, eventually through holes on the back, or from the waist area.

In other words, at least a first part of the garment body has one or more ventilation openings and/or is made of a material allowing air flow. The first part of the garment body coincides with, or includes, at least the second region of the housing seat for the inflatable member. Preferably, the first part is in a chest or front region of the garment.

The limited size of the inflatable member in a deflated condition, inside the garment according to the present invention, does not hinder the user's movements and thus it further ensures maximum comfort during riding. Specifically, with respect to garments comprising a large number of inflatable members encumbering the user's movements, the garment according to the present invention thanks to a particular configuration of the inflatable member, in deflated condition, ensures maximum comfort and facilitates the user's movements.

Other advantages, features and operation steps of the present invention will be made evident in the following detailed description of preferred embodiments thereof, given by way of example and not for limitative purposes. Reference will be made to the figures of the accompanying drawings wherein:
- Figure 1 represents the garment according to the present invention showing a portion of the inflatable member in a deflated condition;
- Figure 2 represents the garment according to the present invention showing a portion of the inflatable member in an inflated condition;
- Figure 3 represents the inflatable member of the garment according to the present invention arranged on a plane and in a deflated condition;
- Figure 4 represents the inflatable member of the garment according to the present invention arranged on a plane and in an inflated condition;
- Figure 5 is a view according to the direction V of Figure 3 of a portion of the inflatable member, in a folded configuration, according to the present invention;
- Figure 6 schematically shows, partially in section, an inflatable member inside a seat of the garment of Figure 1 in a deflated condition;
- Figure 7 schematically shows, partially in section, an inflatable member inside a seat of the garment of Figure 1 in an inflated condition.

### Detailed description of a preferred embodiment

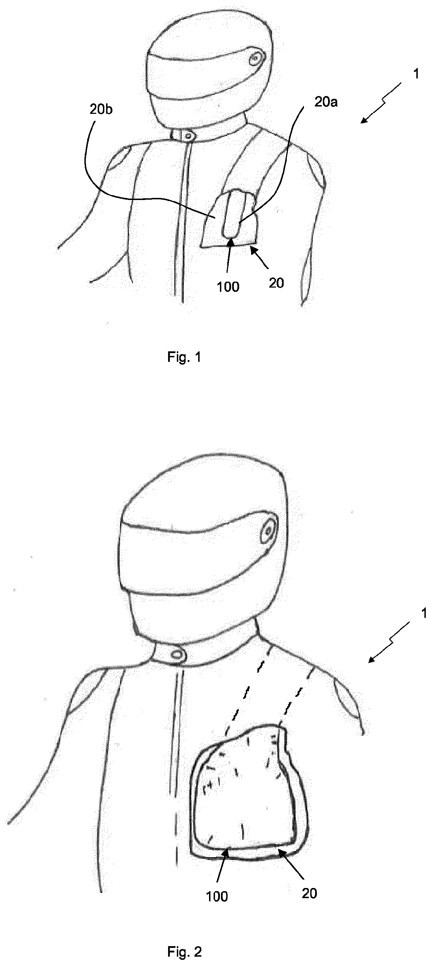

Referring to Figures 1 and 2, the present invention relates in particular to a garment 1, for example a sport garment, even more in particular for dynamic sports or activities, such as motorcycling. More specifically, said garment 1 is apt to be associated with a protection device for personal protection including an inflatable member 100. The device is apt to protect a passenger, a motor vehicle driver or a similar user, from impact and/or falls during a sporting and/or working activity.

In particular, the garment 1 according to the present invention is associated with an inflatable member 100, for protecting a user, which can be inflated by means of a fluid, for example a pressurized gas such as helium. Therefore, in the garment 1 it is included, for example, a soft bag made of air-tight material, such as in polyamide, and apt to substantially assume a first operating condition of rest, or deflated condition, and a second operating condition active, or inflated condition. The inflating modalities of the inflatable member 100 will be described below.

As shown in Figures 1 and 2, the inflatable member 100 is placed in or associated with a seat 20 at a portion of the garment 1, in the example at a portion covering part of the user's bust.

Even more particularly, the inflatable member 100 is in the seat 20 hidden from view, in contact with an internal portion of the garment 1.

In the illustrated example, the seat 20 is a pocket, i.e. a housing formed between two layers of the garment.

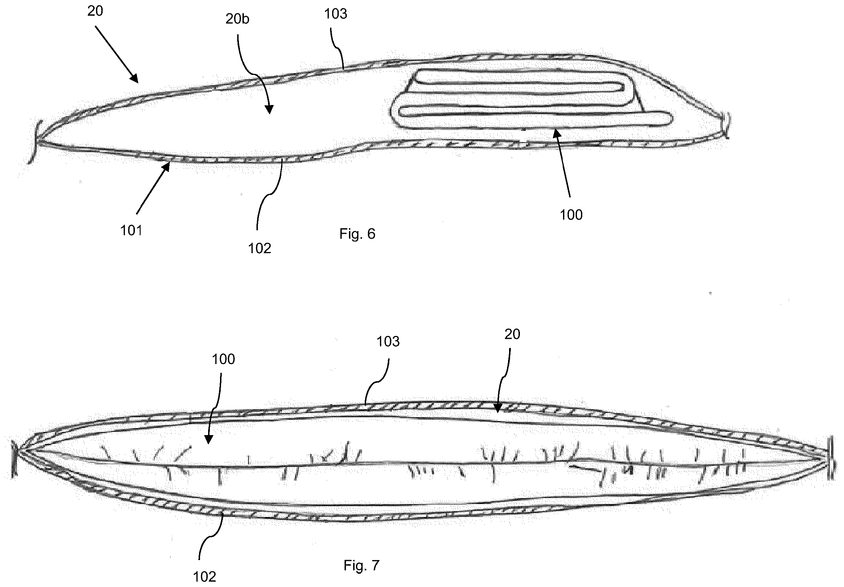

With reference to Figures 6 and 7, the two layers may be an inner lining 2 and an outer lining 3 of the garment. The outer lining 3 forms a covering surface for the inflatable member. The inner lining 2 may be a liner. It cannot be excluded that the garment may include other layers which may form the garment structure.

The inflatable member 100 can then be arranged at a portion of garment 1, in the example at a portion covering part of the thorax, and preferably part of the back. More particularly, the inflatable member 100 is hidden from view, in contact with an inner side of said portion of garment 1. Therefore, portion of the garment 1 forms a covering surface of the inflatable member.

Even more particularly, with reference to Figures 1-2, 6-7, the garment 1 according to the present invention has at least one seat 20 apt to include, or to be associated with, said inflatable member 100 or a part thereof. Preferably, the seat 20 has a first region 20a and a second region 20b, for example substantially at the user's chest. The seat 20, visible in the figures, is actually symmetrical with respect to a user's sagittal plane. Therefore, a first region 20a and a second region 20b of the seat are provided to the right and to the left of the sagittal plane. For the sake of conciseness, in the following description reference will be made to the two regions 20a and 20b on the left, it being understood that the same characteristics also apply to the diametrically opposed areas on the user's chest.

In an alternative embodiment, having same characteristics here described, the seat extends over the whole thorax, and covers the entire user's chest. The first region is a region on one side of the chest and the second region is the central region up to the other side of the chest.

The seat having the two regions can also be placed on other areas of the garment.

According to an aspect of the present disclosure, the first region 20a is configured to accommodate the inflatable member when the latter is in a deflated condition. The second region 20b is free from the inflatable member when the latter is in a deflated condition and does not receive the latter. The second region 20b is intended to receive the inflatable member when the latter is in an inflated condition.

In other words, the second region 20b defines an empty space, that is, not occupied by the inflatable member 100, when it is in a non-inflated configuration. On the contrary, when the inflatable member 100 is in an inflated configuration, it is spread out and occupies the space of the second region 20b.

Preferably, the garment 1 is made, at least partially, of a transpiring material and/or a material allowing air to flow through it, such as for example a material having openings, such as holes, slots, cuts. In other words, the garment 1 comprises at least a portion, or first portion, made of a transpiring material and/or material allowing air to flow through it.

Preferably, said first portion, made of a transpiring material and/or material allowing air to flow through it, is placed at the user's chest or front, back or shoulder area. More preferably, the garment 1 comprises a plurality of portions, made of a transpiring material and/or material allowing the passage of air, placed at the user's chest, back or shoulders. For example, a first portion and a second portion, made of a transpiring material and/or a material allowing the air to flow through, may be present wherein respectively said first portion and said second portion are made respectively at a user's chest and back, chest and shoulders, or back and shoulders.

In a preferred embodiment, the at least one portion, or first portion, of a transpiring material and/or material allowing air to flow through it, corresponds to or at least comprises the so-called second region 20b of the seat 20 for receiving the inflatable member 100. In other words, at least the portion of the garment 1 corresponding to the second region 20b is made of a transpiring material or a material allowing air to flow through it. Preferably, at least the garment area 1, corresponding to the regions 20a and 20b containing the portions of inflatable member 100 intended to protect the user's chest, is made of a transpiring material or material allowing air to flow through it. In both cases, when the inflatable member 100 is in a deflated condition, said second region 20b has greater breathability or allows greater ventilation with respect to said first region 20a of the seat 20.

In an even more preferred embodiment, beside the second region 20b of the seat 20 being made of a transpiring material and/or material allowing air passage and positioned at the user's chest, the garment 1 comprises at least a second portion, made of transpiring material and/or material that allows the passage of air, placed at user's shoulders or back. In such a way, especially when a material allowing the air to flow is used, during dynamic activity, such as a motorbike or horseback ride or on skis, the garment 1 allows the passage of an air flow from the portion, at the user's chest, to the second portion, at the user's shoulders or back.

During normal use, i.e. when the inflatable member 100 is in a non-inflated condition, the garment 1 thus ensures good breathability and/or ventilation. So, in particular, the breathability and/or ventilation is ensured for most of the time of using the garment 1 and is reduced only when the inflatable member 100 is in an inflated condition.

It follows that the inflatable member 100 extends into the seat 20 at the time of inflation. Therefore, it can be understood that, at the time of inflation, the inflatable member occupies the free space of the second region, and allows complete protection, for example of the user's chest.

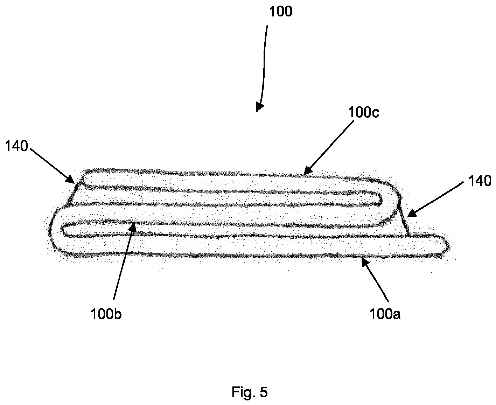

As shown in Figures 5-7, the inflatable member 100 can preferably assume, in the deflated condition, a folded configuration, substantially an accordion configuration. In the folded condition, the inflatable member 100 has overlapped sub-portions 100a, 100b, and 100c.

At the time of inflation an unfolding of the inflatable member 100 occurs, allowing the latter to switch from a configuration where it is folded on itself to a configuration in which it extends, covering and protecting a surface of the user's body larger than the surface when it was in a deflated condition. Indeed, when the inflatable member 100 is inflated thanks to the gas compression, it unfolds spreading out into the seat and therefore occupying a larger surface with respect to one occupied in the deflated condition. Protection is obtained on a wider area of the user's body. This configuration of the inflatable member 100 ensures maximum user's comfort during driving, i.e. when the inflatable member 100 is in a deflated condition, facilitating user's freedom of movement. In fact, only in the inflated condition, the inflatable member occupies both the first region 20a of the seat and the second region 20b of the seat.

In particular, when the inflatable member 100 is in a deflated condition, the sub-portions 100a, 100b, 100c will be arranged one above the other, such that the inflatable member 100 occupies a limited area of the garment 1. Together with an appropriate sizing of the inflatable member 100 and a correct selection of said sub-portions 100a, 100b, 100c number and extension, such configuration allows the inflatable member 100 itself to occupy in the inflated condition a limited surface of the garment 1 and, at the same time, to have an overall thickness not hindering user's movements. The inflatable member 100 so configured also ensures good user's protection, since, upon inflation, it expands covering a larger surface of the body than the one covered in a deflated condition.

In order to assure the stability of the folded configuration of the inflatable member 100 during use of the garment 1, and thus preventing said inflatable member 100 from spreading out when it is in the non-inflated condition, the sub-portions 100a, 100b, 100c are joined together. More particularly, the sub-portions 100a, 100b, 100c are joined by means of suitable connection means 140, which can comprise for example thermo-adhesive tape. In the specific example in Figure 5, the sub-portion 100a is joined by means of connection means 140 to the sub-portion 100b which, in turn, is joined to the sub-portion 100c. Furthermore, said connecting means 140 are apt to break when subject to a predetermined tension threshold. In such a way, the connecting means 140 allow simultaneously the inflatable member 100 to maintain the folded configuration during normal use of the garment 1 and to unfold upon inflation, for example due to a fall or imminent impact. Alternatively, as a connecting means, it may be provided a sleeve body, in elastic and flexible material, for example a mesh sleeve or elastic mesh, which follows the deployment of the inflatable member up to the extended position.

In order to maintain a folded position, the inflatable member 100 can also be pressed in a folded condition.

As far as the inflatable member 100, the following is observed.

The inflatable member 100 can be realised according to any of technologies described in the patent applications WO 2010-067288 A1, WO 2016-178143A1, EP 3167730A1, WO 2017-163196A1 in the name of the holder. According to said technology, in a deflated condition, the inflatable member is a substantially flat element which can be folded.

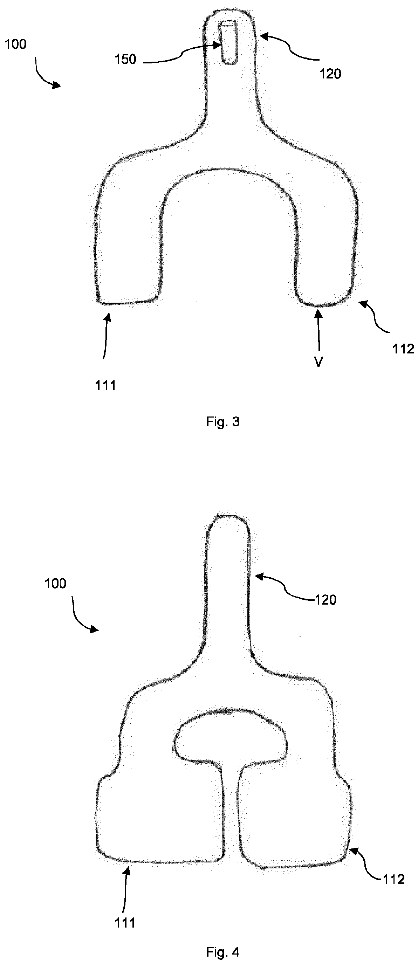

In the depicted embodiment, as shown in Figures 3 and 4, the inflatable member 100 includes two portions 111, 112 intended to protect two user's chest areas, respectively. Such portions 111, 112 are connected to each other so that the inflatable member 100 has a substantially C-shape intended to be placed around a neck region and partially around a user's chest region.

The inflatable member 100 may further comprise a second part 120 arranged at the user's backbone. Preferably, said second part 120 is pneumatically connected to the two portions 111, 112 to form a single inflatable chamber. Moreover, if the garment object of the present invention is a motorcycle suit or jacket, it preferably includes an aerodynamic appendage placed on the back, and said second part 120 of the inflatable member 100 is preferably covered by said aerodynamic appendage. Actually, the aerodynamic appendage forms a covering surface for the second part 120 of the inflatable member 100.

More specifically, with reference to Figure 5, the inflatable member 100 is folded in an accordion configuration at said portions 111, 112 forming the sub-portions 100a, 100b, 100c.

Alternatively, as said, at the user's chest it could be provided a single covering portion of the chest, which is bent in a deflated condition on a side of the chest. This solution can be implemented in combination with the garment described in the European patent application EP 2 740 376. The inflatable member can be arranged in a folded configuration into the pocket located underneath the two linings of the garment of said European patent application. The inflatable member may spread out underneath both linings upon inflation, so as to create a continuous surface on the chest.

Finally, the garment 1 comprises at least a fluid source 150, e.g. a pressurized gas generator, in fluid communication with the inflatable member 100 in order to inject gas into said inflatable member 100. Said fluid source 150 may be a compressed cold gas can, such as for example helium, optionally equipped with a shut-off valve. Alternatively, the fluid source 150 may comprise pyrotechnic or hybrid type gas generators or other types known in the state of the art. The fluid source 150 can be arranged within the inflatable member 100 and is preferably received in the inflatable member 100 spinal portion, arranged as said at the aerodynamic appendage of the garment 1 when the latter is a motorcycle suit or jacket.

With reference to inflation, in order to perform the inflation of the inflatable member 100, in the event of a user's fall and/or slippage and/or unexpected impact, the garment 1 is apt to cooperate with appropriate activation means (not illustrated) operatively connected to the one or more generator of pressurized gas. The opening of the eventual shut-off valve of the inflation can 150 is preferably controlled by a control and management unit based upon the detection of the utilization state; for example, said control unit can implement a fall prediction system that allows a timely identification and a reliable prediction of the fall event by means of accelerometric sensors, integral with the user or the vehicle on which the user travels, and a unit for processing the signals produced by the sensors themselves. Alternatively, the device according to the present invention can also be implemented using an activation cable connected to a vehicle driven by a user, which cable controls the inflatable member 100 inflation upon the user detachment from the vehicle, for example following a fall or an unforeseen impact. In any case, the aforesaid activation and inflation means can be embedded into the garment 1 according to the present invention or placed externally thereof. It should also be noted that the activation methods, although being of particular relevance for an effective operation of the device, will not be further described in greater detail since these methods are substantially already known to a person skilled in the field of personal protection from unexpected impacts.

The subject-matter of the present disclosure has been described hitherto with reference to preferred embodiments thereof. It is to be understood that other embodiments relating to the same inventive idea may exist, all of these falling within the scope of protection of the claims which are stated hereinbelow.

## Claims

1. Garment (1) for the protection of a user comprising an inflatable member (100) and at least one seat (20) configured to receive the inflatable member (100), wherein said inflatable member is apt to assume an inflated condition and a deflated condition, and wherein said seat (20) includes at least one first region (20a) intended to receive said inflatable member (100) in the deflated condition and one second region (20b) free or without said inflatable member (100) in the deflated condition and adapted to receive at least a part of said inflatable member (100) in inflated condition; wherein said second region (20b) is open, or seamless, towards said first region (20a) to receive at least a part of said inflatable member (100) in inflated condition.

2. Garment (1) according to claim 1, wherein said first region (20a) and said second region (20b) define a single chamber.

3. Garment (1) according to claim 1 or 2, wherein said seat (20) is an area of the garment (1) comprised between two layers (2, 3) of the garment (1), or a pocket or a compartment of the garment (1).

4. Garment (1) for the protection of a user according any one of the preceding claims, wherein the body of the garment (1) is made of a transpiring material and/or a material allowing the air to flow, and wherein when said inflatable member (100) is in a deflated condition, said second region (20b) has greater breathability and/or allows greater ventilation than said first region (20a) of the seat (20).

5. Garment (1) for the protection of a user according to any one of the claims from 1 to 3, wherein at least part of the body of the garment (1) has one or more ventilation openings and/or is made of a material allowing the air to flow and wherein said first part corresponds to, or comprises, at least the second region (20b) of the seat (20) for receiving the inflatable member (100).

6. Garment (1) for the protection of a user according to claim 5, wherein said first part is a chest or front region of the garment.

7. Garment (1) according any one of the preceding claims, wherein in an inflated condition a part of said inflatable member (100) occupies the first region (20a) of the seat (20) and a part of said inflatable member occupies the second region (20b) of the seat (20).

8. Garment (1) according any one of the preceding claims, wherein in a deflated condition said inflatable member (100) is at least partially folded on itself so as to form sub-portions (100a, 100b, 100c) arranged one above the other.

9. Garment (1) according to claim 8, wherein in a deflated condition said inflatable member (100) is at least partially folded on itself in an accordion configuration.

10. Garment (1) according to claim 8 or 9, wherein said sub-portions (100a, 100b, 100c) are joined together by connecting means (140).

11. Garment (1) for the protection of a user according to claim 10, wherein said connecting means (140) include one or more elements able to break when the inflatable member (100) inflates, or wherein said connecting means include an elastic tubular body apt to accompany an extension of the inflatable member.

12. Garment (1) for the protection of a user according to any one of the preceding claims, wherein said seat (20) is arranged on a user's chest, and the first region (20a) of the seat (20) is on one side of the chest and the second region (20b) of the seat (20) extends over at least one part of a user's chest more central than the first region (20a).

13. Garment (1) for the protection of a user according to claim 12 in combination with claim 6, further comprising at least a second part made of a transpiring material and/or a material allowing air to flow and wherein said second part is arranged on a user's shoulders or back.

14. Garment (1) for the protection of a user according to any one of the preceding claims, wherein the inflatable member (100) includes two portions (111, 112) each of which is apt to protect a right area and a left area of the user's chest relative to a sagittal plane of the user, and wherein said garment includes two of said seats, each for one of said two portions (111, 112), and wherein each of said two portions (111, 112) is folded on itself in a folded condition and occupies a respective first region of the respective seat (20) on one side of the chest, and wherein in the inflated condition each portion (111, 112) occupies a right side and left side of the chest respectively.

15. Garment (1) for the protection of a user according to claim 14, comprising a spinal portion (120) apt to protect the back of the user, wherein said first (111) and second (112) portion and said spinal portion (120) of the inflatable member (100) form a single bag.

16. Garment (1) for the protection of a user according to any one of the preceding claims, said garment being a suit or a motorcycle jacket.

17. Method for protecting a user through an inflatable member, for the protection of a user, and being said inflatable member apt to assume an inflated condition and a deflated condition, wherein the method involves:
arranging the inflatable member (100) in a seat (20) of a garment (1);
wherein the inflatable member in deflated position occupies a first region of the seat (20a) and leaves a second region (20b) of the seat (20) free or without said inflatable member;
and wherein in an inflation phase of the inflatable member, at least a part of the inflatable member spreads out into, or occupies, the second region (20b) of the seat.

18. Method according to claim 17, wherein the second region (20b) has or more ventilation openings and wherein in a deflated condition, ventilation air is apt to flow in the second region (20b) of the seat (20) to promote garment ventilation.

19. Method according to claim 18, wherein the second region (20b) is in the chest or front area of the garment (1), and the ventilation air enters the garment (1) through said chest or front area.

20. Method according to claim 17, 18 or 19, wherein in the inflated condition, the inflatable member occupies the first region (20a) and the second region (20b) of the seat (20), wherein in the deflated condition, the inflatable member (100) is folded on itself in the first region (20a), and wherein the inflatable member (100) unfolds into the seat (20) during inflation.
